# EUROPEAN PATENT APPLICATION

(11) **EP 4 744 929 A2**
(43) Date of publication of application: **20.05.2026**
(21) Application number: 26169700.7
(22) Date of filing: 26.02.2025
(51) Int. Cl.: B60K 35/23

(54) **DISPLAY CONTROL DEVICE FOR VEHICLE, DISPLAY CONTROL METHOD FOR VEHICLE, AND RECORDING MEDIUM RECORDING DISPLAY CONTROL PROGRAM FOR VEHICLE**

(30) Priority: 06.03.2024 JP 2024034369
(62) Divisional of application: 25160265.2
(71) Applicant: Toyota Jidosha Kabushiki Kaisha, Toyota-shi, Aichi-ken 471-8571 (JP)
(72) Inventor: TSUJINO, Miki, TOYOTA-SHI, AICHI-KEN, 471-8571 (JP)
(74) Representative: Cabinet Beau de Loménie

(57) **Abstract**

A display control device (28) acquires incline angle information of a road on which the vehicle is traveling. The display control device displays, at a display unit (24, 25, or 26), an image portraying the vehicle and an image portraying the road on which the vehicle is traveling, in which the vehicle is viewed from a virtual viewpoint, by altering the image portraying the vehicle and the image portraying the road so as to be tilted in accordance with the acquired incline angle information.

## Description

### BACKGROUND

### Technical Field

The present disclosure relates to a display control device for a vehicle, a display control method for a vehicle, and a recording medium recording a display control program for a vehicle.

### Related Art

Japanese Patent No. 7,086,798 discloses a vehicle control device in which: a display unit displays images; a recognition section recognizes objects located in a nearby of the host vehicle, including other vehicles; a driving control section generates a target trajectory of the host vehicle on the basis of states of objects recognized by the recognition section, and controls one or both of speed and steering of the host vehicle on the basis of the generated target trajectory; and an image as viewed from behind the host vehicle is displayed at the display unit, in which an image simulating another vehicle recognized as an object by the recognition section is superimposed on an image simulating a road on which the host vehicle is located.

However, when the host vehicle is traveling on an inclined road, if an image as if the vehicle is traveling on a flat road is displayed at the display unit in the host vehicle, the occupant of the host vehicle may feel a sense of strangeness.

The vehicle control device disclosed in Japanese Patent No. 7,086,798 displays the image as viewed from behind the host vehicle at the display unit, in which an image simulating another vehicle is superimposed on an image simulating the road on which the host vehicle is located. Japanese Patent No. 7,086,798 gives no consideration to a situation in which the road that the host vehicle is traveling on is inclined.

An object of the present disclosure is to provide a display control device for a vehicle, a display control method for a vehicle and a recording medium recording a display control program for a vehicle that, under conditions in which the vehicle is traveling on an inclined road, moderate a sense of strangeness felt by an occupant of the vehicle when an image representing a state of the nearby of the vehicle is presented to the occupant.

### SUMMARY

A control device for a vehicle according to a first aspect includes: an acquisition section that acquires incline angle information of a road on which the vehicle is traveling; and a display control section that displays, at a display unit, an image portraying the vehicle and an image portraying the road on which the vehicle is traveling, in which the vehicle is viewed from a virtual viewpoint, by altering the image portraying the vehicle and the image portraying the road so as to be tilted in accordance with the incline angle information acquired by the acquisition section.

The control device for a vehicle according to the first aspect acquires the incline angle information of the road on which the vehicle is traveling. The control device displays, at a display unit, an image portraying the vehicle and an image portraying the road on which the vehicle is traveling, in which the vehicle is viewed from a virtual viewpoint, by altering the image portraying the vehicle and the image portraying the road so as to be tilted in accordance with the incline angle information. Therefore, under conditions in which the vehicle is traveling on an inclined road, when an image representing the state of the nearby of the vehicle is presented to an occupant of the vehicle, a sense of strangeness felt by the occupant may be moderated.

In a control device for a vehicle according to a second aspect, in the control device for a vehicle according to the first aspect, the display control section: alters a position and orientation of the virtual viewpoint in accordance with the incline angle information; and displays the image portraying the vehicle and the image portraying the road at the display unit as viewed from the virtual viewpoint whose position and orientation have been altered. Therefore, the inclination of the vehicle and the road may be visualized easily just by changing the virtual viewpoint.

**In** a control device for a vehicle according to a third aspect, in the control device for a vehicle according to the first aspect or the second aspect: the acquisition section acquires incline angle information of a nearby vehicle to the vehicle as the incline angle information of the road, the incline angle information of the nearby vehicle being calculated from image processing of an image of the nearby vehicle; and the display control section displays an image portraying the nearby vehicle and an image portraying the road at a location of the image portraying the nearby vehicle at the display unit, by altering the image portraying the nearby vehicle and the image portraying the road at the location of the image portraying the nearby vehicle so as to be tilted in accordance with the incline angle information of the road. Therefore, when the vehicle is traveling on an inclined road, because vehicles nearby (for example, a preceding vehicle) are also inclined, the occupant of the vehicle may recognize the tilting of the road as being more realistic.

In a control device for a vehicle according to a fourth aspect, in the control device for a vehicle according to any of the first to third aspects: the acquisition section acquires the incline angle information of the road on the basis of at least one of an image captured by a camera mounted at the vehicle or point cloud information detected by a radar device; and the display control section displays the image portraying the vehicle and the image portraying the road at the display unit, by altering the image portraying the vehicle and the image portraying the road so as to be tilted in accordance with the incline angle information of the road. Therefore, more detailed sloping of the road may be reproduced on the basis of images captured by the camera mounted at the vehicle and point cloud information detected by the radar device.

In a control device for a vehicle according to a fifth aspect, in the control device for a vehicle according to any of the first to fourth aspects, the display control section displays a display object between the image portraying the vehicle and an image portraying a preceding vehicle traveling in front of the vehicle, by displaying the display object so as to be tilted in accordance with the incline angle information of the road. Therefore, because a display object disposed between the image portraying the vehicle and the image portraying the preceding vehicle may also be tilted, the occupant of the vehicle may recognize the tilting of the road as being more realistic. Thus, the actual inclination of the road may be suitably visualized in the image.

In a control device for a vehicle according to a sixth aspect, in the control device for a vehicle according to any of the first to fifth aspects, the display control section displays the image portraying the vehicle and the image portraying the road at the display unit, by altering the image portraying the vehicle and the image portraying the road so as to be tilted when an incline angle represented by incline angle information acquired in a predetermined travel section is greater than a threshold value specified in advance. Therefore, inclined displays of the image portraying the road when the road has a very small inclination or is simply uneven may be suppressed. Thus, motion sickness and annoyance of the occupant may be suppressed.

In a control device for a vehicle according to a seventh aspect, in the control device for a vehicle according to any of the first to sixth aspects, the display control section displays the image portraying the road at the display unit with, in the image portraying the road, at least a portion of the road the rearward of the image portraying the vehicle not being tilted. Therefore, the fact that the road the vehicle is traveling on is inclined is visualized to be more easily understood.

A display control method for a vehicle according to an eighth aspect includes: acquiring incline angle information of a road on which the vehicle is traveling; and, displaying, at a display unit, an image portraying the vehicle and an image portraying the road on which the vehicle is traveling, in which the vehicle is viewed from a virtual viewpoint, by altering the image portraying the vehicle and the image portraying the road so as to be tilted in accordance with the acquired incline angle information. Therefore, under conditions in which the vehicle is traveling on an inclined road, when an image representing the state of the nearby of the vehicle is presented to an occupant of the vehicle, a sense of strangeness felt by the occupant may be moderated.

A display control program for a vehicle according to a ninth aspect causes processing including: acquiring incline angle information of a road on which the vehicle is traveling; and, displaying, at a display unit, an image portraying the vehicle and an image portraying the road on which the vehicle is traveling, in which the vehicle is viewed from a virtual viewpoint, by altering the image portraying the vehicle and the image portraying the road so as to be tilted in accordance with the acquired incline angle information. Therefore, under conditions in which the vehicle is traveling on an inclined road, when an image representing the state of the nearby of the vehicle is presented to an occupant of the vehicle, a sense of strangeness felt by the occupant may be moderated.

As described above, according to the display control device for a vehicle, display control method for a vehicle and recording medium recording the display control program for a vehicle according to the present disclosure, under conditions in which a vehicle is traveling on an inclined road, a sense of strangeness for an occupant of the vehicle when an image portraying a state of the nearby of the vehicle is presented to the occupant may be moderated.

### BRIEF DESCRIPTION OF DRAWINGS

Fig. 1 is a view for describing a vehicle display control system according to an exemplary embodiment.
Fig. 2 is a view depicting an example of an image to be displayed at a display unit.
Fig. 3 is a block diagram showing hardware structures of a vehicle display control device according to the exemplary embodiment.
Fig. 4 is a block diagram showing functional structures of the vehicle display control device according to the exemplary embodiment.
Fig. 5 is a view showing an example of an image depicting a state of a nearby of a host vehicle.
Fig. 6A and Fig. 6B are diagrams showing a situation in which the host vehicle and a preceding vehicle are running so as to ascend a slope.
Fig. 7A and Fig. 7B are diagrams showing a situation in which the host vehicle and a preceding vehicle are running so as to descend a slope.
Fig. 8 is a diagram showing an example of a flowchart executed by the vehicle display control device.
Fig. 9A to Fig. 9G are diagrams for describing changes in position of a virtual viewpoint.
Fig. 10A, Fig. 10B and Fig. 10C are views for describing the generation of images depicting states in the nearby of the host vehicle on the basis of images captured by a camera and point cloud information detected by a radar device.
Fig. 11A and Fig. 11B are diagrams for describing a variant example.

### DETAILED DESCRIPTION

### = First Exemplary Embodiment =

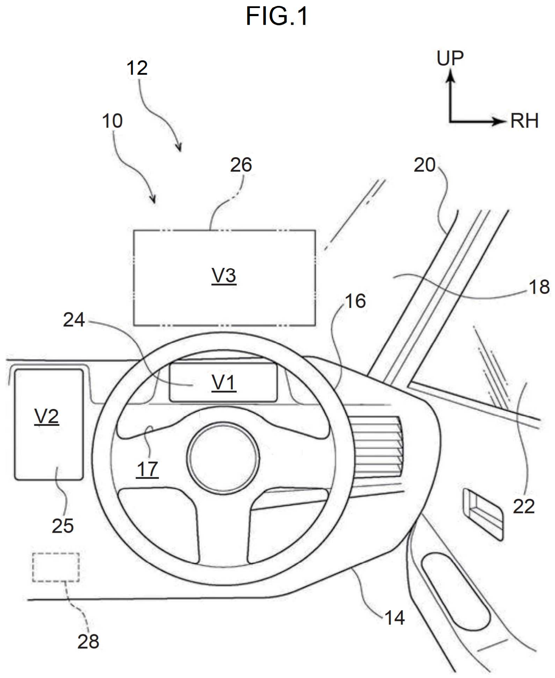

Fig. 1 is a diagram for describing a vehicle display control system 10 according to a first exemplary embodiment. The arrow UP marked in Fig. 1 indicates the upper side in a vehicle vertical direction and the arrow RH indicates the right side in a vehicle width direction. The vertical direction and left-and-right direction referred to in the descriptions below refer to, respectively, upper and lower in the vehicle vertical direction and left and right in the vehicle width direction.

As shown in Fig. 1, an instrument panel 14 is provided at a front portion of a cabin interior of a vehicle 12. A steering wheel 16 is provided at the right side of the instrument panel 14. In the present exemplary embodiment, an example is described in which a driver seat of the vehicle 12 is disposed at the vehicle right side. Disposition of the driver seat is not limited to this; the vehicle display control system 10 may be employed in a vehicle in which the driver seat is disposed at the vehicle left side.

A windshield glass 18 is provided at a front end portion of the instrument panel 14. A vehicle right side end portion of the windshield glass 18 is fixed to a vehicle right side front pillar 20. The front pillar 20 extends in the vehicle vertical direction, and the windshield glass 18 is fixed to a vehicle width direction inner side end portion of the front pillar 20. A front end portion of a front side glass 22 is fixed to a vehicle width direction outer side end portion of the front pillar 20.

A first display unit 24 equipped with an image display region V1 is provided at the instrument panel 14. The first display unit 24 is constituted by an instrument cluster display provided at the vehicle right side of the instrument panel 14 to the vehicle front of the driver seat. The first display unit 24 is connected with various instrument devices mounted in the vehicle 12. The first display unit 24 is provided at a position within a field of view of a driver in a state in which the eyeline of the driver is oriented to the vehicle front.

A second display unit 25 equipped with an image display region V2 is provided at the instrument panel 14. The second display unit 25 is structured by a center display screen disposed at a central portion in the vehicle width direction of the instrument panel 14.

A third display unit 26 including an image display region V3 is provided at the windshield glass 18. The third display unit 26 is provided at the vehicle upper side of the first display unit 24. The third display unit 26 is constituted by a projection screen that is projected onto by a head-up display device (not shown in the drawings) that serves as a display device. Specifically, a head-up display device (not shown in the drawings) that is capable of projecting images is provided at the vehicle front side of the instrument panel 14, and the head-up display device (not shown in the drawings) is structured so as to project images onto the third display unit 26 of the windshield glass 18. That is, the third display unit 26 is a portion of the windshield glass 18 that serves as the projection screen of the head-up display device (not shown in the drawings).

A vehicle display control device 28 structuring the vehicle display control system 10 is embedded in the vehicle 12. The vehicle display control device 28 according to the present exemplary embodiment is, for example, an electronic control unit (ECU) that performs various kinds of control. The vehicle display control device 28 is configured so as to display an image showing a state of a nearby (neighborhood) of the host vehicle, assuming viewing from a virtual viewpoint, at at least one of the display region V1, the display region V2 and the display region V3.

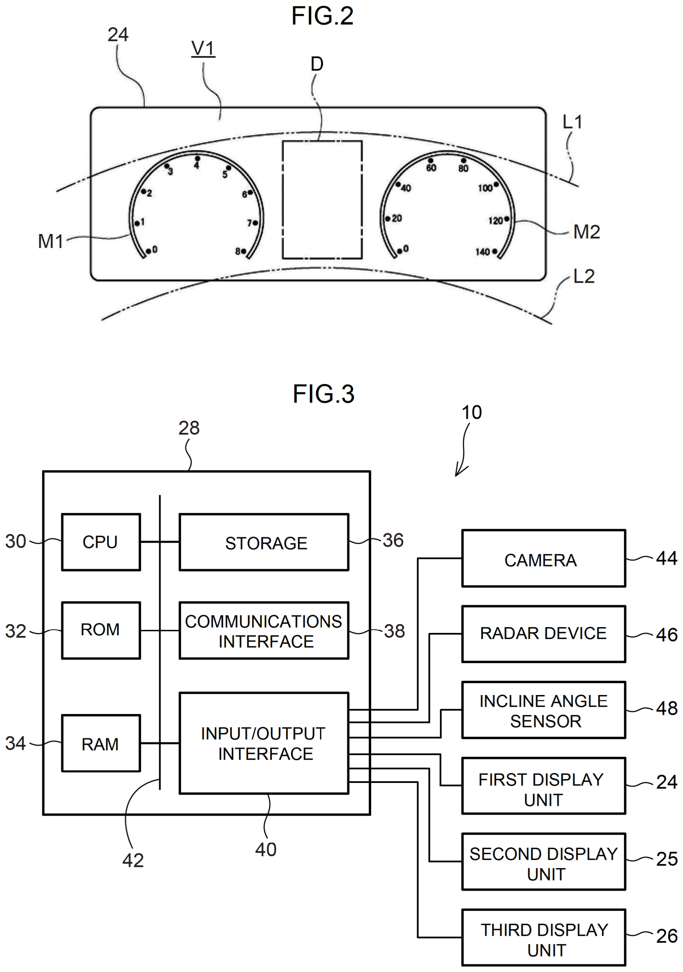

Below, a case in which images are displayed at the first display unit 24 of the vehicle 12 is described. Fig. 2 is a view depicting an example of an image to be displayed at the display region V1 of the first display unit 24.

The vehicle display control device 28 causes an image showing a state of the nearby of the vehicle 12 to be displayed in a region D, which is a partial region of the display region V1. The region D is a region that a driver on the driver seat can see through an opening portion 17 of the steering wheel 16. More specifically, as shown in Fig. 2, the middle of a region that may be viewed between an upper edge line L1 and a lower edge line L2 of the opening portion 17 of the steering wheel 16 is the region D. Meter displays M1 and M2 showing clusters of measurement instruments of the vehicle 12 are displayed to left and right of the region D.

### - Hardware structures of the vehicle display control device 28 -

As shown in Fig. 3, the vehicle display control device 28 includes a central processing unit (CPU) 30, read-only memory (ROM) 32, random access memory (RAM) 34, storage 36, a communications interface 38 and an input/output interface 40. These structures are connected to be capable of communicating with one another via an internal bus 42.

The CPU 30 is a central arithmetic processing unit that executes various programs and controls respective parts. That is, the CPU 30 reads a program from the ROM 32 or the storage 36, and executes the program using the RAM 34 as a workspace. The CPU 30 performs control of the structures described above and various kinds of computational processing in accordance with programs recorded in the ROM 32 or the storage 36.

The ROM 32 stores various programs and various kinds of data. The RAM 34 serves as a workspace, temporarily memorizing programs and data. The storage 36 is a non-transitory recording medium structured by a hard disk drive (HDD) or solid state drive (SSD). The storage 36 stores various programs, including an operating system, and various kinds of data. In the present exemplary embodiment, the ROM 32 or the storage 36 stores a display program and the like for implementing display processing and such.

The communications interface 38 is an interface for the vehicle display control device 28 to communicate with a server and other equipment, and is implemented in accordance with technology using a standard such as, for example, Controller Area Network (CAN), Ethernet (registered trademark), Long Term Evolution (LTE), Fiber Distributed Data Interface (FDDI), Wi-Fi (registered trademark) or the like.

The input/output interface 40 is connected to a camera 44, a radar device 46, an incline angle sensor 48, the first display unit 24, the second display unit 25 and the head-up display device (which is not shown in the drawings). Images are projected onto the third display unit 26 by the head-up display device (not shown in the drawings).

The camera 44 captures images of the nearby of the vehicle 12 and outputs the captured images.

The radar device 46 detects objects such as nearby vehicles and the like located in the nearby of the vehicle 12 in the form of point cloud information.

The incline angle sensor 48 is embedded in the vehicle 12 and successively detects incline angles of the vehicle 12.

The camera 44, radar device 46 and incline angle sensor 48 are realized by previously known technologies.

### - Functional structures of the vehicle display control device 28 -

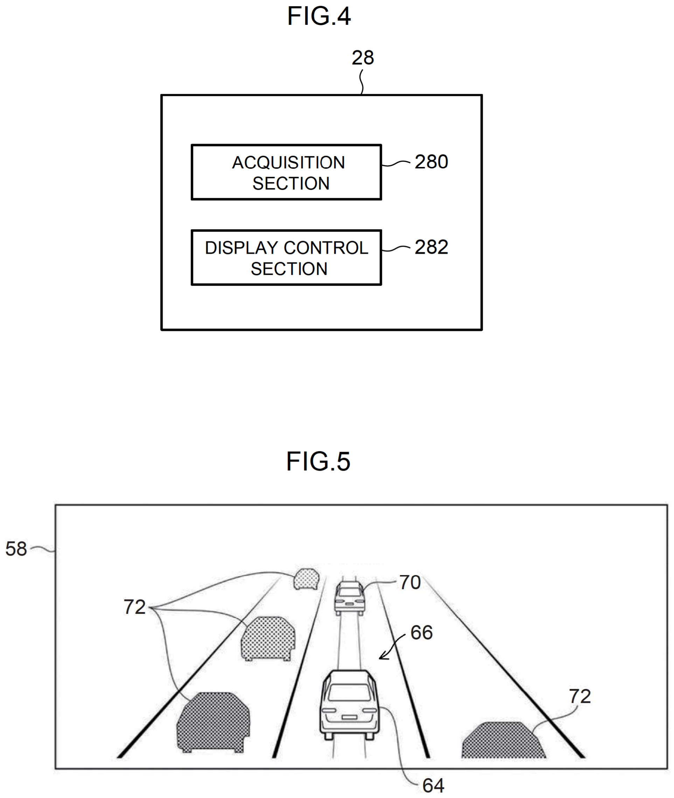

The vehicle display control device 28 uses the hardware resources described above to realize various functions. The functional structures realized by the vehicle display control device 28 are described with reference to Fig. 4.

As shown in Fig. 4, as functional structures the vehicle display control device 28 includes an acquisition section 280 and a display control section 282. These functional structures are realized by the CPU 30 reading and executing a program memorized in the ROM 32 or storage 36.

The acquisition section 280 acquires images captured by the camera 44 and point cloud information detected by the radar device 46.

On the basis of the various kinds of information acquired by the acquisition section 280, the display control section 282 generates an image representing a nearby state of the vehicle 12. The display control section 282 displays the image representing the nearby state of the vehicle 12 in the region D of the first display unit 24.

Fig. 5 is a view showing an example of the image representing the nearby state of the vehicle 12 that is displayed in the region D of the first display unit 24. As shown in Fig. 5, an image 58 includes an image 64 portraying the host vehicle, an image 66 portraying a road on which the host vehicle is traveling, and images 70 and 72 portraying nearby vehicles that are located in the nearby of the host vehicle.

The acquisition section 280 acquires incline angle information of the road on which the vehicle 12 is traveling. More specifically, the acquisition section 280 acquires an incline angle of the vehicle 12 detected by the incline angle sensor 48 as the incline angle information of the road.

Then, the display control section 282 performs control so as to display the image 64 portraying the vehicle 12 and the image 66 portraying the road on which the vehicle 12 is traveling at the first display unit 24 with the vehicle 12 being viewed from a virtual viewpoint. When nearby vehicles are present, the display control section 282 also performs control so as to display the images 70 and 72 portraying nearby vehicles at the first display unit 24.

The display control section 282 alters the image 64 portraying the vehicle 12 and the image 66 portraying the road so as to tilt in accordance with the incline angle information acquired by the acquisition section 280, and displays the image 64 portraying the vehicle 12 and the image 66 portraying the road at the first display unit 24. When nearby vehicles are present, the display control section 282 also alters the images 70 and 72 portraying nearby vehicles so as to tilt and performs control to display the tilted images 70 and 7at the first display unit 24.

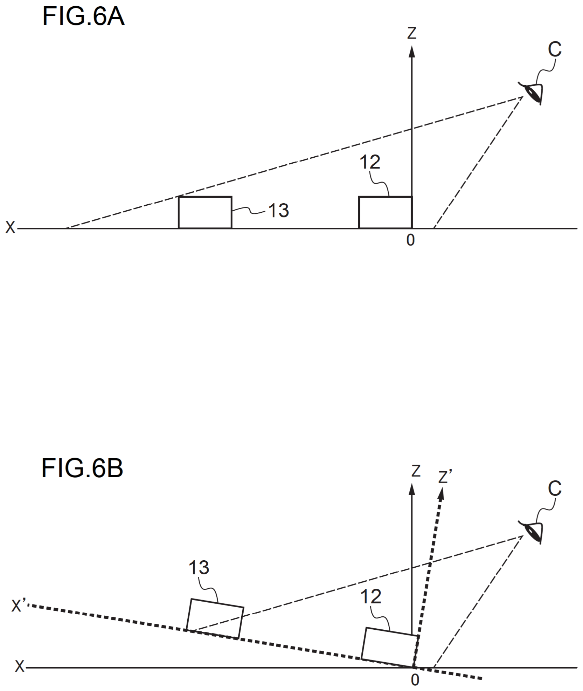

Fig. 6A and Fig. 6B are diagrams for describing processing to alter the image 64 portraying the vehicle 12 and the image 66 portraying the road so as to tilt. Fig. 6A and Fig. 6B are diagrams in which the vehicle 12 and a preceding vehicle 13 are viewed from sideward of the vehicle 12. The X axis shown in Fig. 6A and Fig. 6B corresponds to a road. The X axis direction shown in Fig. 6A and Fig. 6B represents the progress direction of the vehicle 12. The Z axis direction shown in Fig. 6A and Fig. 6B is a direction perpendicular to the progress direction of the vehicle 12 and corresponds to the vertical direction of the vehicle. Only the preceding vehicle 13 is shown in Fig. 6A and Fig. 6B; nearby vehicles other than the preceding vehicle 13 are not shown.

The scene when the vehicle 12 is viewed from virtual viewpoint C shown in Fig. 6A corresponds to the image 58 shown in Fig. 5. More specifically, when the vehicle 12, the road and the preceding vehicle 13 are viewed from viewpoint C, the respective images are disposed as illustrated in Fig. 5. The preceding vehicle 13 in Fig. 6A corresponds to the image 70 in Fig. 5.

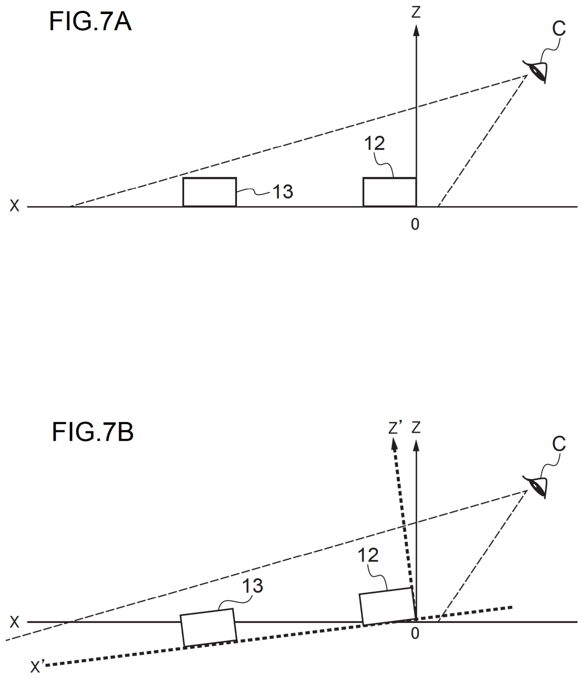

As shown in Fig. 6B, the display control section 282 alters the image 64 portraying the vehicle 12 and the image 66 portraying the road so as to tilt in accordance with the incline angle information acquired by the acquisition section 280. The Z' axis in Fig. 6B is an axis that is tilted from the Z axis in Fig. 6A in accordance with the incline angle information, and the X' axis in Fig. 6B is an axis that is tilted from the X axis in Fig. 6A in accordance with the incline angle information. Fig. 6B is an example in which the vehicle 12 and the preceding vehicle 13 are running so as to ascend a slope. In contrast, Fig. 7A is an example in which the vehicle 12 and preceding vehicle 13 are running on a flat road, and Fig. 7B is an example in which the vehicle 12 and preceding vehicle 13 are running so as to descend a slope.

Thus, in accordance with the incline angle of a road on which the vehicle 12 is actually running, the display control section 282 alters the image 64 portraying the vehicle 12, the image 66 portraying the road and the images 70 and 72 portraying nearby vehicles so as to tilt to a pitch direction (or a direction opposite to a pitch direction). As a result, an actual gradient of the road may be suitably visualized in the image 58.

The display control section 282 alters the image 64 portraying the vehicle 12 and the image 66 portraying the road so as to tilt when the incline angle represented by the incline angle information acquired in a predetermined travel segment is greater than a threshold value specified in advance. In some situations, the incline angle information acquired by the incline angle sensor 48 includes noise and the like. In other situations, very small rises and dips are present on a road, and consequently these rises and dips are detected as incline angles. Therefore, if the image 64 portraying the vehicle 12 and the image 66 portraying the road are altered so as to tilt each time incline angle information is acquired by the incline angle sensor 48, an actual gradient of the road may not be visualized in the image 58.

Accordingly, the display control section 282 calculates, for example, an average of incline angles acquired in a predetermined travel segment on the basis of a time series of incline angle information acquired in the predetermined travel segment. When the average incline angle is greater than the threshold value specified in advance, the vehicle display control device 28 alters the image 64 portraying the vehicle 12 and the image 66 portraying the road so as to tilt. As a result, an actual gradient of the road may be suitably visualized in the image 58. In addition, inclined display of the image portraying the road when the road has a very small gradient or is simply uneven may be suppressed. Thus, motion sickness and annoyance of the occupant may be suppressed.

### - Operation -

Now, operation of the vehicle display control system 10 according to the present exemplary embodiment is described.

### - Vehicle display control processing -

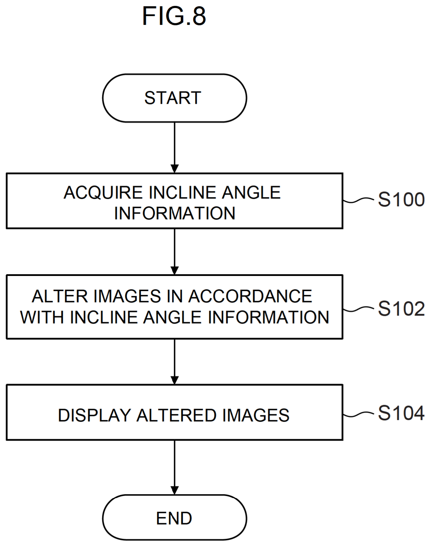

An example of vehicle display control processing that causes display of a predetermined image in the region D of the first display unit 24 is described using the flowchart shown in Fig. 8. This vehicle display control processing is realized by the CPU 30 reading the vehicle display control program from the ROM 32 or storage 36, loading the program into the RAM 34, and executing the program.

In step S100, the acquisition section 280 acquires incline angle information detected by the incline angle sensor 48.

In step S102, the display control section 282 alters the image 64 portraying the vehicle 12 and the image 66 portraying the road so as to tilt in accordance with the incline angle information acquired in step S100. The display control section 282 also alters the images 70 and 72 portraying nearby vehicles in accordance with the incline angle information acquired in step S100.

In step S104, the display control section 282 causes the image 64 portraying the vehicle 12, the images 70 and 72 portraying nearby vehicles and the image 66 portraying the road to be displayed at the first display unit 24.

As described above, the display control device for a vehicle according to the first exemplary embodiment acquires incline angle information of a road on which the vehicle is traveling. When an image portraying the vehicle and an image portraying the road on which the vehicle is traveling are to be displayed at the display unit while the vehicle is being viewed from a virtual viewpoint, the display control device for a vehicle alters the image portraying the vehicle and the image portraying the road so as to tilt in accordance with the acquired incline angle information, and displays the altered image portraying the vehicle and image portraying the road at the display unit. Therefore, when the vehicle is traveling on an inclined road, a sense of strangeness felt by an occupant of the vehicle may be moderated. More specifically, compared to a configuration in which an image portraying a flat road and an image portraying the vehicle running on the flat road are continuously displayed even while the host vehicle is traveling on an inclined road, a sense of strangeness felt by the occupant of the vehicle may be suppressed.

### = Second Exemplary Embodiment =

Now, a second exemplary embodiment is described. A vehicle display control system according to the second exemplary embodiment differs from the first exemplary embodiment in that the image 64 portraying the vehicle 12 and the image 66 portraying the road are altered so as to tilt by the position and direction of a virtual viewpoint being altered.

Structures of the vehicle display control system according to the second exemplary embodiment are the same as in the vehicle display control system 10 according to the first exemplary embodiment, and accordingly are not described here.

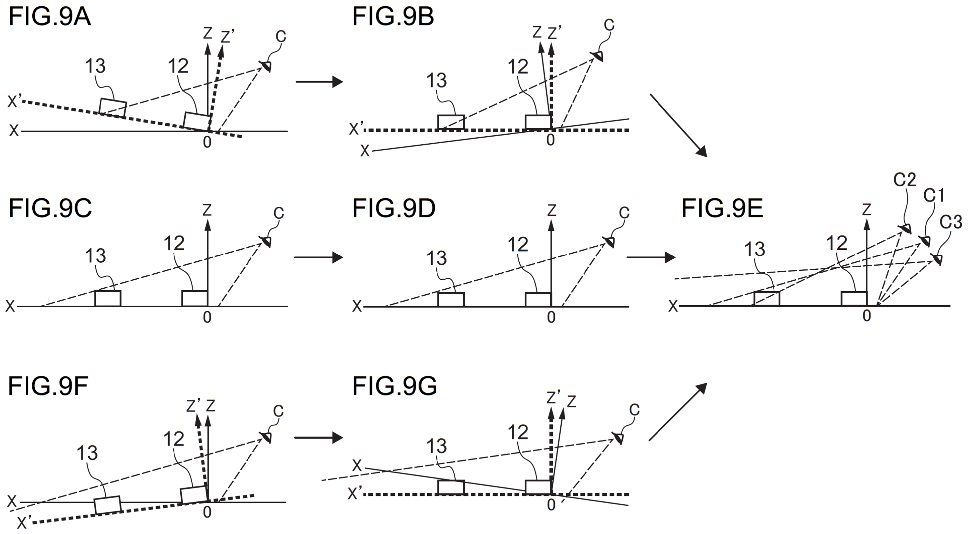

Fig. 9A to Fig. 9G are diagrams for describing changes in position and orientation of the virtual viewpoint. The diagram in Fig. 9A is the same as in Fig. 6B. The diagram in Fig. 9C is the same as in Fig. 6A and Fig. 7A. The diagram in Fig. 9F is the same as in Fig. 7B.

When, as shown in Fig. 9A, the X axis is tilted to the X' axis and the Z axis is tilted to the Z' axis, the vehicle 12 and the preceding vehicle 13 are seen from the position and orientation of the virtual viewpoint C in Fig. 9A as if ascending a slope. When, as shown in Fig. 9B, the X' axis is tilted back to the horizontal and the Z' axis is tilted back to the vertical while maintaining the same relationships between the position and orientation of the virtual viewpoint C and the X' axis and Z' axis, the virtual viewpoint C becomes the virtual viewpoint C2 in Fig. 9E. When viewed from the position and orientation of the virtual viewpoint C2, the vehicle 12 and the preceding vehicle 13 are seen as if ascending a slope.

Therefore, when a road is inclined and the vehicle 12 and preceding vehicle 13 are ascending a slope, the position and orientation of the virtual viewpoint are adjusted to C2 in Fig. 9E. As a result, the vehicle 12 and the preceding vehicle 13 seem to be ascending a slope.

In contrast, when a road is flat, the position and orientation of the virtual viewpoint are the position and orientation of C1 in Fig. 9E.

When a road is inclined and the vehicle 12 and preceding vehicle 13 are descending a slope, the direction and orientation of the virtual viewpoint are adjusted to C3 in Fig. 9E. More specifically, as shown in Fig. 9F, when the X axis is tilted to the X' axis and the Z axis is tilted to the Z' axis, from the position and orientation of the virtual viewpoint C, the vehicle 12 and the preceding vehicle 13 seem to be descending a slope. When, as shown in Fig. 9G, the X' axis is tilted back to the horizontal and the Z' axis is tilted back to the vertical while maintaining the same relationships between the position and orientation of the virtual viewpoint C and the X' axis and Z' axis, the virtual viewpoint C becomes the virtual viewpoint C3 in Fig. 9E. Thus, the vehicle 12 and the preceding vehicle 13 seem to be descending a slope.

In this manner, the display control section 282 alters the position and orientation of the virtual viewpoint in accordance with the incline angle information acquired by the acquisition section 280, and displays the image 64 portraying the vehicle 12 and the image 66 portraying the road as viewed from the virtual viewpoint whose position and orientation have been altered at the first display unit 24.

As described above, the display control device for a vehicle according to the second exemplary embodiment acquires incline angle information of a road on which the vehicle is traveling. The display control device for a vehicle changes the position and orientation of the virtual viewpoint in accordance with the acquired incline angle information, and displays the image portraying the vehicle and the image portraying the road at the display unit as viewed from the virtual viewpoint whose position and orientation have been altered. Therefore, when the vehicle is traveling on an inclined road, a sense of strangeness felt by an occupant of the vehicle may be moderated. More specifically, inclination of the vehicle and the road may be visualized just by changing the virtual viewpoint.

### = Third Exemplary Embodiment =

Now, a third exemplary embodiment is described. A vehicle display control system according to the third exemplary embodiment differs from the first exemplary embodiment and the second exemplary embodiment in that image processing is executed on an image of a nearby vehicle captured by the camera 44, and incline angle information is acquired from the results of the image processing.

Structures of the vehicle display control system according to the third exemplary embodiment are the same as in the vehicle display control system 10 according to the first exemplary embodiment, and accordingly are not described here.

The display control device for a vehicle according to the first aspect acquires the incline angle information from the incline angle sensor 48. However, an incline angle of a road may be calculated on the basis of attitude information when a nearby vehicle is traveling.

Accordingly, the acquisition section 280 according to the third exemplary embodiment acquires incline angle information of a nearby vehicle by executing previously known image processing on an image of a nearby vehicle captured by the camera 44. The acquisition section 280 acquires the incline angle information of the nearby vehicle to serve as incline angle information of the road.

The display control section 282 acquiring the incline angle information of the nearby vehicle as the incline angle information of the road alters the image 64 portraying the vehicle 12, the images 70 and 72 portraying nearby vehicles and the image 66, which portrays the road at the location of an image portraying the nearby vehicle, so as to tilt in accordance with the incline angle information of the road.

As described above, from image processing on an image of a vehicle in the nearby of the host vehicle, the display control device for a vehicle according to the third exemplary embodiment acquires calculated incline angle information of the nearby vehicle to serve as incline angle information of a road. The display control device for a vehicle then alters an image portraying the nearby vehicle and an image portraying the road at a location of the image portraying the nearby vehicle so as to tilt in accordance with the incline angle information of the road. Therefore, when the host vehicle is traveling on an inclined road, a sense of strangeness felt by an occupant of the host vehicle may be moderated. More specifically, when the vehicle 12 is traveling on an inclined road, the images 70 and 72 portraying nearby vehicles (for example, the image 70 portraying a preceding vehicle) are also tilted. As a result, the occupant of the host vehicle may recognize the tilting of the road as being more realistic.

### = Fourth Exemplary Embodiment =

Now, a fourth exemplary embodiment is described. A vehicle display control system according to the fourth exemplary embodiment differs from the first to third exemplary embodiments in that incline angle information of a road is acquired on the basis of images captured by the camera 44 and point cloud information detected by the radar device 46.

Structures of the vehicle display control system according to the fourth exemplary embodiment are the same as in the vehicle display control system 10 according to the first exemplary embodiment, and accordingly are not described here.

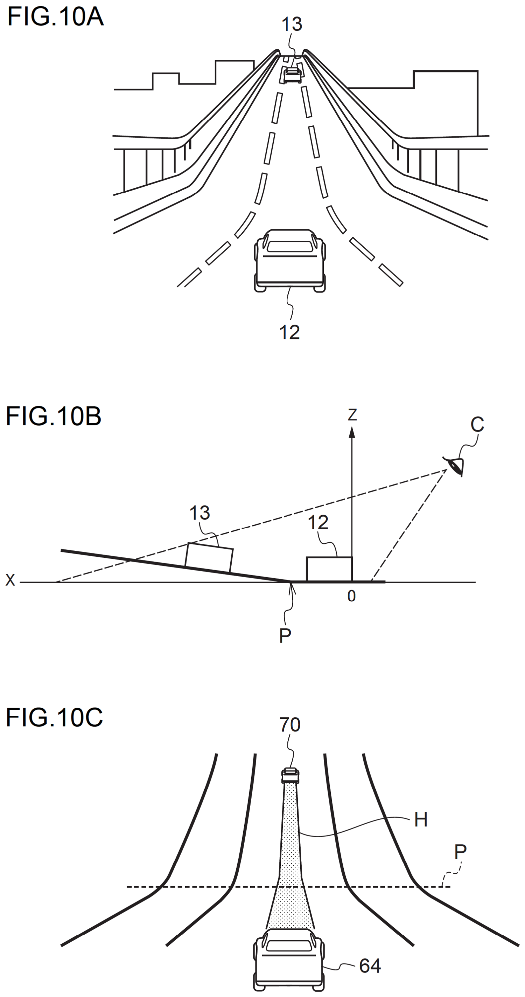

Fig. 10A, Fig. 10B and Fig. 10C are views for describing processing in the vehicle display control system according to the fourth exemplary embodiment. As shown in Fig. 10A, when a road on which the vehicle 12 is traveling transitions from a flat road to an inclined road, it is preferable if the image displayed at the first display unit 24 is displayed as if transitioning from a flat road to an inclined road.

Accordingly, the vehicle display control device according to the fourth exemplary embodiment acquires incline angle information of the road on the basis of images captured by the camera 44 and point cloud information detected by the radar device 46, and generates an image representing nearby conditions of the vehicle 12 on the basis of this incline angle information.

Therefore, the acquisition section 280 according to the fourth exemplary embodiment acquires the incline angle information of the road on the basis of the images captured by the camera 44 and point cloud information detected by the radar device 46.

For example, the acquisition section 280 according to the fourth exemplary embodiment specifies a position of the preceding vehicle 13 and calculates incline angle information of the road on the basis of the position of the preceding vehicle 13.

As a further example, the acquisition section 280 according to the fourth exemplary embodiment specifies position information of plural points on the road on the basis of the images captured by the camera 44 and point cloud information detected by the radar device 46. The acquisition section 280 then acquires incline angle information of the road by linking the plural points and executing interpolation processing.

The display control section 282 according to the fourth exemplary embodiment then alters the image 64 portraying the vehicle 12, the image 66 portraying the road and the images 70 and 72 portraying nearby vehicles so as to tilt in accordance with the incline angle information of the road, and displays the altered images at the first display unit 24.

For example, on the basis of the position information of the plural points of the road, the display control section 282 according to the fourth exemplary embodiment may compute the inclined road as surfaces using previously known mathematical expressions and plot these surfaces.

Fig. 10B is a diagram in which the vehicle 12 and the preceding vehicle 13 in the state depicted in Fig. 10A are viewed from sideward. Fig. 10C is a view showing an example of an image, to be displayed at the first display unit 24, representing the nearby state of the vehicle 12. The image representing the nearby state of the vehicle 12 in Fig. 10C is an image representing a scene when the vehicle 12 and preceding vehicle 13 are viewed from viewpoint C in Fig. 10B. The image in Fig. 10C visualizes the fact that the image 70 portraying the preceding vehicle 13 is already running on an inclined road surface. In Fig. 10B and Fig. 10C, the position of an inflection point P between the flat road and the inclined road is visible, and the occupant of the vehicle 12 may recognize the tilting of the road as being more realistic.

The display control section 282 according to the fourth exemplary embodiment causes a display object displayed between the image 64 portraying the vehicle 12 and the image 70 portraying the preceding vehicle 13 running in front of the vehicle 12 to be displayed so as to be tilted in accordance with the incline angle information of the road.

For example, a display object H shown in Fig. 10C is a trajectory disposed between the image 64 portraying the vehicle 12 and the image portraying the preceding vehicle 13 running in front of the vehicle 12. As shown in Fig. 10C, the trajectory is rendered as if inclined. As a result, the occupant of the vehicle 12 may recognize the tilting of the road as being more realistic.

As described above, the display control device for a vehicle according to the fourth exemplary embodiment acquires incline angle information of a road on the basis of at least one of images captured by the camera mounted at the vehicle and point cloud information detected by the radar device. The display control device for a vehicle alters an image portraying the vehicle and an image portraying the road so as to tilt in accordance with the incline angle information of the road, and causes the altered image portraying the vehicle and image portraying the road to be displayed at the display unit. Therefore, when the vehicle is traveling on an inclined road, a sense of strangeness felt by an occupant of the vehicle may be moderated. In addition, more detailed sloping of the road may be reproduced on the basis of the images captured by the camera mounted at the host vehicle and the point cloud information detected by the radar device. More specifically, a display object disposed between the image 64 portraying the vehicle 12 and the image portraying the preceding vehicle 13 running in front of the vehicle 12 may be tilted, and consequently the occupant of the host vehicle may recognize the tilting of the road as being more realistic.

Above, the vehicle display control system 10 is described in accordance with the respective exemplary embodiments, but it will be clear that numerous modes may be embodied within a scope not departing from the gist of the present disclosure.

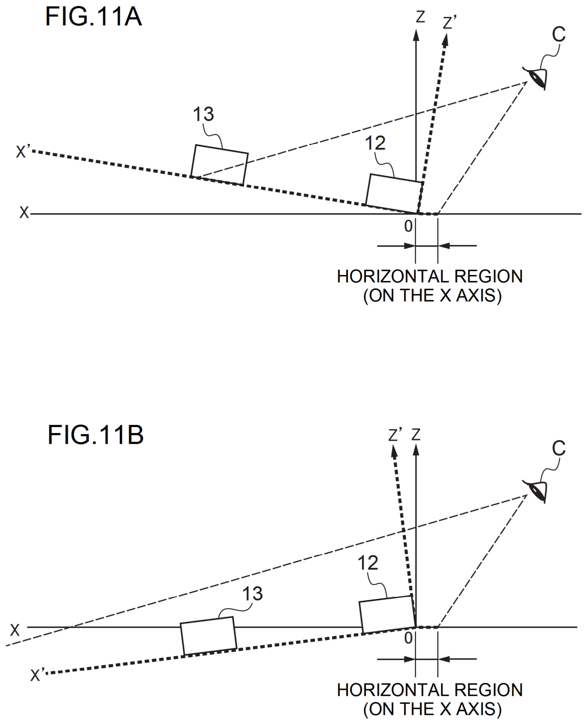

For example, the display control section may cause, of the image portraying the road, at least a portion of the road rearward of the image portraying the vehicle to be displayed at the display unit without tilting. Fig. 11A and Fig. 11B are diagrams for describing a variant example of the exemplary embodiments. As shown in Fig. 11A and Fig. 11B, when the image portraying the vehicle and the image portraying the road are altered so as to be tilted in accordance with incline angle information of the road, a region of the image portraying the road (for example, the region to the rear of the vehicle 12) may be shown as if horizontal (in Fig. 11, labeled "horizontal region (on the X axis)"). Thus, because a region of the inclined road is made horizontal, an inclined region and a horizontal region of the road may be displayed at the same time, and the fact that the road on which the vehicle 12 is traveling is inclined is visualized to be more easily understood.

As a further example, in the exemplary embodiments described above, examples are described in which an image portraying the vehicle and an image portraying the road on which the vehicle is traveling, which are examples of images representing the nearby state of the vehicle 12, are displayed at the first display unit 24 but this is not limiting. For example, the image portraying the vehicle and the image portraying the road on which the vehicle is traveling may be displayed at the second display unit 25 or the third display unit 26.

The processing that, in the exemplary embodiments described above, is executed by the CPU 30 reading a program may be executed by various kinds of processor other than the CPU 30. Examples of processors in these cases include a PLD (programmable logic device) in which a circuit configuration can be modified after fabrication, such as an FPGA (field programmable gate array) or the like, a dedicated electronic circuit which is a processor with a circuit configuration that is specially designed to execute specific processing, such as an ASIC (application-specific integrated circuit) or the like, and so forth. The above processing may be executed by one of these various kinds of processors, and may be executed by a combination of two or more processors of the same or different kinds, for example, plural FPGAs, a combination of a CPU with an FPGA, or the like. Hardware structures of these various kinds of processors are, to be more specific, electronic circuits combining circuit components such as semiconductor components and the like.

The exemplary embodiments described above have configurations in which various kinds of data are memorized in the storage 36, but this is not limiting. For example, a non-transitory recording medium, such as a CD-ROM (compact disc read-only memory), DVD-ROM (digital versatile disc read-only memory), USB (universal serial bus) memory or the like, may be used as a memory unit. In this case, various programs, data and the like are stored at this recording medium.

The flows of processing described in the above exemplary embodiments are examples. Unnecessary steps may be removed, new steps may be added, and processing sequences may be rearranged within a scope not departing from the gist of the disclosure.

All publications, patent applications, and technical standards mentioned in this specification are herein incorporated by reference to the same extent as if each individual publication, patent application, or technical standard was specifically and individually indicated to be incorporated by reference.

## Claims

1. A display control device (28) for a vehicle (12), the display control device comprising:
a memory (36); and
a processor (30) coupled to the memory (36), wherein the processor (30) is configured to:
acquire incline angle information of a road on which the vehicle (12) is traveling; and
display, at a display unit (24, 25, or 26), an image portraying the vehicle (64) and an image portraying the road (66) on which the vehicle is traveling, in which the vehicle (12) is viewed from a virtual viewpoint, by altering the image portraying the vehicle (64) and the image portraying the road (66) so as to be tilted in accordance with the acquired incline angle information,
**characterized in that** the processor (30) is configured to display the image portraying the road (66) at the display unit (24, 25, or 26) with, in the image portraying the road (66), at least a portion of the road rearward of the image portraying the vehicle (64) not being tilted.

2. The display control device (28) for a vehicle (12) according to claim 1, wherein the processor (30) is configured to:
alter a position and orientation of the virtual viewpoint in accordance with the incline angle information; and
display the image portraying the vehicle (64) and the image portraying the road (66) at the display unit (24, 25, or 26) as viewed from the virtual viewpoint whose position and orientation have been altered.

3. The display control device (28) for a vehicle (12) according to claim 1 or claim 2, wherein the processor (30) is configured to:
acquire incline angle information of a nearby vehicle to the vehicle (12) as the incline angle information of the road, the incline angle information of the nearby vehicle being calculated from image processing of an image of the nearby vehicle; and
display an image portraying the nearby vehicle (70 or 72) and an image portraying the road (66) at a location of the image portraying the nearby vehicle (70 or 72) at the display unit (24, 25, or 26), by altering the image portraying the nearby vehicle (70 or 72) and the image portraying the road (66) at the location of the image portraying the nearby vehicle (70 or 72) so as to be tilted in accordance with the incline angle information of the road.

4. The display control device (28) for a vehicle according to any of claims 1 to 3, wherein the processor (30) is configured to:
acquire the incline angle information of the road on the basis of at least one of an image captured by a camera (44) mounted at the vehicle or point cloud information detected by a radar device (46); and
display the image portraying the vehicle (64) and the image portraying the road (66) at the display unit (24, 25, or 26), by altering the image portraying the vehicle (64) and the image portraying the road (66) so as to be tilted in accordance with the incline angle information of the road.

5. The display control device (28) for a vehicle according to any of claims 1 to 4, wherein the processor (30) is configured to display a display object between the image portraying the vehicle (64) and an image portraying a preceding vehicle (70) traveling in front of the vehicle (12), by displaying the display object so as to be tilted in accordance with the incline angle information of the road.

6. The display control device (28) for a vehicle according to any of claims 1 to 5, wherein the processor (30) is configured to display the image portraying the vehicle (64) and the image portraying the road (66) at the display unit (24, 25, or 26), by altering the image portraying the vehicle (64) and the image portraying the road (66) so as to be tilted when an incline angle represented by incline angle information acquired in a predetermined travel segment is greater than a threshold value specified in advance.

7. A display control method for a vehicle (12), comprising, by a processor (30):
acquiring incline angle information of a road on which the vehicle is traveling; and
displaying, at a display unit (24, 25, or 26), an image portraying the vehicle (64) and an image portraying the road (66) on which the vehicle is traveling, in which the vehicle is viewed from a virtual viewpoint, by altering the image portraying the vehicle (64) and the image portraying the road (66) so as to be tilted in accordance with the acquired incline angle information
**characterized in that** the method comprises displaying the image portraying the road (66) at the display unit (24, 25, or 26) with, in the image portraying the road (66), at least a portion of the road rearward of the image portraying the vehicle (64) not being tilted.

8. A non-transitory recording medium (32 or 36) storing a display control program for a vehicle (12), the display control program executable by a processor (30) to perform processing comprising:
acquiring incline angle information of a road on which the vehicle is traveling; and
displaying, at a display unit (24, 25, or 26), an image portraying the vehicle (64) and an image portraying the road (66) on which the vehicle is traveling, in which the vehicle is viewed from a virtual viewpoint, by altering the image portraying the vehicle (64) and the image portraying the road (66) so as to be tilted in accordance with the acquired incline angle information,
**characterized in that** the processing comprises displaying the image portraying the road (66) at the display unit (24, 25, or 26) with, in the image portraying the road (66), at least a portion of the road rearward of the image portraying the vehicle (64) not being tilted.
